(19) **Europäisches Patentamt / European Patent Office / Office européen des brevets**

(11) **EP 4 672 585 A1**

(12) **EUROPEAN PATENT APPLICATION**
published in accordance with Art. 153(4) EPC

(43) Date of publication:
**31.12.2025 Bulletin 2026/01**

(21) Application number: **24769647.9**

(22) Date of filing: **16.01.2024**

(51) International Patent Classification (IPC):
**H02M 3/158** $^{(2006.01)}$

(52) Cooperative Patent Classification (CPC):
**H02M 1/00; H02M 1/32; H02M 1/36; H02M 3/158**

(86) International application number:
**PCT/CN2024/072486**

(87) International publication number:
**WO 2024/187951 (19.09.2024 Gazette 2024/38)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **14.03.2023 CN 202310280556**

(71) Applicants:
• **Huawei Technologies Co., Ltd.**
  **Shenzhen, Guangdong 518129 (CN)**
• **Institute Of Advanced Technology, University of Science and Technology of China**
  **Anhui 230009 (CN)**

(72) Inventors:
• **LIU, Baiyi**
  **Shenzhen, Guangdong 518129 (CN)**
• **ZHU, Xiang**
  **Shenzhen, Guangdong 518129 (CN)**
• **CAI, Yuanbin**
  **Shenzhen, Guangdong 518129 (CN)**
• **WU, Chuan**
  **Hefei, Anhui 230009 (CN)**
• **ZHOU, Wanxin**
  **Hefei, Anhui 230009 (CN)**
• **SONG, Kezhu**
  **Hefei, Anhui 230009 (CN)**

(74) Representative: **Thun, Clemens**
  **Mitscherlich PartmbB**
  **Patent- und Rechtsanwälte**
  **Karlstraße 7**
  **80333 München (DE)**

(54) **VOLTAGE TRANSIENT RESPONSE CONTROL CIRCUIT**

(57) This application relates to a voltage transient response control circuit, including: a voltage regulator module and a voltage switching module. The voltage regulator module and the voltage switching module are separately connected to a load. The voltage regulator module is configured to provide a low power supply voltage for the load based on a power supply requirement of the load. The voltage switching module is configured to: perform voltage detection on the load to obtain a load voltage, generate a switching signal based on a change trend of the load voltage and value relationships between the load voltage and a first threshold and between the load voltage and a second threshold, and control, based on the switching signal, a switched capacitor in the voltage switching module to absorb an excess charge when the load voltage overshoots and release a stored charge when the load voltage droops. Transient response of a power supply can be improved, load capacitance is reduced, and control over an overshoot and a droop of a load voltage is implemented. In addition, a voltage may be used as a charge storage medium to absorb an excess charge generated when the load voltage overshoots and release the charge when the load droops, so that energy is more fully utilized.

FIG. 4

EP 4 672 585 A1

**Description**

This application claims priority to Chinese Patent Application No. 202310280556.X, filed with the China National Intellectual Property Administration on March 14, 2023 and entitled "VOLTAGE TRANSIENT RESPONSE CONTROL CIRCUIT", which is incorporated herein by reference in its entirety.

**TECHNICAL FIELD**

This application relates to the field of integrated circuit technologies, and in particular, to a voltage transient response control circuit.

**BACKGROUND**

An XPU (the XPU includes a CPU (Central Processing Unit, central processing unit), a GPU (Graphics Processing Unit, graphics processing unit), a TPU (Tensor Processing Unit, tensor processing unit), a DPU (Deep learning Processing Unit, deep learning processing unit), an NPU (Neural network Processing Unit, neural network processing unit), a BPU (Brain Processing Unit, brain processing unit), and the like) are experiencing a sharp increase in current requirements (a current is up to 1000 A or above) and have large dynamic changes (changes reach 2000 A/$\mu$s or above). A large current requires more VRM (Voltage Regulator Module, voltage regulator module) assemblies, and the large dynamic changes require a higher load capacitor capacity to maintain a stable load voltage. However, the two requirements conflict with each other in terms of an area of a circuit board. In addition, simply adding capacitors provides limited improvement to transient response. With addition of the capacitors, a capacitor located farther from the load becomes less effective. In this case, there is an urgent need to add an additional circuit to improve transient response of a power supply and reduce a quantity of load capacitors.

**SUMMARY**

In view of this, a voltage transient response control circuit is provided, so that transient response of a power supply can be improved, load capacitance is reduced, and control over an overshoot and a droop of a load voltage is implemented. In addition, the voltage may be used as a charge storage medium to absorb an excess charge generated when the load voltage overshoots and release the charge when the load droops, so that energy is more fully utilized.

According to a first aspect, an embodiment of this application provides a voltage transient response control circuit, including: a switched capacitor, a voltage regulator module, and a voltage switching module. Two ends of the switched capacitor are respectively connected to a load and the voltage switching module.

The voltage regulator module and the voltage switching module are separately connected to the load.

The voltage regulator module is configured to provide a low power supply voltage for the load based on a power supply requirement of the load.

The voltage switching module is configured to: perform voltage detection on the load to obtain a load voltage, generate a switching signal based on a change trend of the load voltage and value relationships between the load voltage and a first threshold and between the load voltage and a second threshold, and control, based on the switching signal, the switched capacitor to absorb an excess charge when the load voltage overshoots and release a stored charge when the load voltage droops.

According to the voltage transient response control circuit provided in the first aspect, transient response of a power supply can be improved, load capacitance is reduced, and control over an overshoot and a droop of the load voltage is implemented. In addition, the voltage may be used as a charge storage medium to absorb the excess charge generated when the load voltage overshoots and release the charge when the load droops, so that energy is more fully utilized.

In a possible implementation,
the switched capacitor includes a first switched capacitor and a second switched capacitor. The voltage switching module includes a first droop unit, a first overshoot unit, an auxiliary power supply, and a controller. The first droop unit includes a first switch and a second switch. The first overshoot unit includes a third switch and a fourth switch.

One end of the first switched capacitor is connected to the load, and the other end is connected to a common end of the first switch and the second switch. The other end of the first switch is connected to a positive terminal of the auxiliary power supply. The other end of the second switch is connected to a ground. One end of the second switched capacitor is connected to the load, and the other end is connected to a common end of the third switch and the fourth switch. The other end of the third switch is connected to the positive terminal of the auxiliary power supply. The other end of the fourth switch is connected to the ground. A negative terminal of the auxiliary power supply is grounded. The controller is connected to the first switch, the second switch, the third switch, the fourth switch, and the load.

The controller is configured to perform voltage detection on the load to obtain the load voltage. The controller is further configured to: when it is determined that the load voltage is less than the first threshold and greater than the second threshold, and a voltage value of the load voltage is stable, send a generated first control signal to the first switch and the second switch and send a generated second control signal to the third switch and the fourth switch, where the first switch and the second switch are respectively turned off and on in response to the first control signal, so that the first switched capacitor enters an initial state; and the third switch and the fourth switch are respectively turned on and off in response to the second control signal, so that the second switched capacitor enters the initial state. The controller is further configured to: generate the switching signal based on the change trend of the load voltage and the value relationships between the load voltage and the first threshold and between the load voltage and the second threshold and send the switching signal to the switches in the first droop unit or the first overshoot unit, so that the first switched capacitor or the second switched capacitor releases the stored charge when the load voltage droops, and the first switched capacitor or the second switched capacitor absorbs the excess charge when the load voltage overshoots.

In a possible implementation, there are a plurality of first droop units in the voltage switching module and a plurality of first switched capacitors are included, and/or there are a plurality of first overshoot units in the voltage switching module and a plurality of second switched capacitors are included. Two ends of each first switched capacitor are respectively connected to the load and a common end of a first switch and a second switch in a corresponding first droop unit, and two ends of each second switched capacitor are respectively connected to a common end of a third switch and a fourth switch in a corresponding first overshoot unit.

The controller is further configured to determine a current control mode, to respectively send the first control signal and the second control signal to a target droop unit and a target overshoot unit that correspond to the current control mode and send the switching signal to the target droop unit or the target overshoot unit.

The current control mode is one of a plurality of alternative control modes. First thresholds and/or second thresholds of different alternative control modes are different. Alternative control modes corresponding to different first droop units are different. Alternative control modes corresponding to different first overshoot units are different. The target droop unit is a first droop unit, in the plurality of first droop units, whose alternative mode is the current control mode. The target overshoot unit is a first overshoot unit, in the plurality of first overshoot units, whose alternative mode is the current control mode.

In this way, different alternative control modes, corresponding first droop units, and corresponding first overshoot units may be set according to different requirements, to meet different control requirements.

In a possible implementation, the switched capacitor includes a third switched capacitor and a fourth switched capacitor. The voltage switching module includes a second droop unit, a second overshoot unit, and a controller. The second droop unit includes a first inductor and a fifth switch. The second overshoot unit includes a second inductor and a sixth switch.

The third switched capacitor, the first inductor, and the fifth switch are connected in series and then connected between the load and a ground. The fourth switched capacitor, the second inductor, and the sixth switch are connected in series and then connected between the load and the ground. The controller is connected to the load, the fifth switch, and the sixth switch.

The controller is configured to perform voltage detection on the load to obtain the load voltage. The controller is further configured to: when it is determined that the load voltage is less than the first threshold and greater than the second threshold, and a voltage value of the load voltage is stable, send a generated third control signal to the fifth switch, where the fifth switch is turned on for preset duration and then turned off in response to the third control signal, so that the third switched capacitor enters an initial state; and the sixth switch is in an off state, so that the fourth switched capacitor enters the initial state. The controller is further configured to: generate the switching signal based on the change trend of the load voltage and the value relationships between the load voltage and the first threshold and between the load voltage and the second threshold and send the switching signal to the switch in the second droop unit or the second overshoot unit, so that the third switched capacitor or the fourth switched capacitor releases the stored charge when the load voltage droops, and the third switched capacitor or the fourth switched capacitor absorbs the excess charge when the load voltage overshoots.

In this way, a switched capacitor of an LC circuit is used to implement voltage switching, and an energy loss can be greatly reduced.

In a possible implementation, there are a plurality of second droop units in the voltage switching module and a plurality of third switched capacitors are included, and/or there are a plurality of second overshoot units in the voltage switching module and a plurality of fourth switched capacitors are included. Two ends of each third switched capacitor are respectively connected to the load and a first inductor in a corresponding second droop unit, and two ends of each fourth switched capacitor are respectively connected to the load and a second inductor in a corresponding second overshoot unit.

The controller is further configured to determine a current control mode, to send the third control signal to a target droop unit corresponding to the current control mode and send the switching signal to the target droop unit or a target overshoot unit corresponding to the current control mode.

The current control mode is one of a plurality of alternative control modes. First thresholds and/or second thresholds of different alternative control modes are different. Alternative control modes corresponding to different second droop units are different. Alternative control modes corresponding to different second overshoot units are different. The target droop unit is a second droop unit, in the plurality of second droop units, whose alternative mode is the current control mode. The target overshoot unit is a second overshoot unit, in the plurality of second overshoot units, whose alternative mode is the current control mode.

In a possible implementation, the switched capacitor includes a fifth switched capacitor and a sixth switched capacitor. The voltage switching module includes a third droop unit, a third overshoot unit, and a controller. The third droop unit includes a third inductor, a seventh switch, and an eighth switch. The third overshoot unit includes a fourth inductor, a ninth switch, and a tenth switch.

The fifth switched capacitor, the third inductor, and the seventh switch are connected in series and then connected between the load and a ground. The eighth switch is connected in parallel to the fifth switched capacitor. The sixth switched capacitor, the fourth inductor, and the ninth switch are connected in series and then connected between the load and the ground. The tenth switch is connected in parallel to the sixth switched capacitor. The controller is connected to the load, the seventh switch, the eighth switch, the ninth switch, and the tenth switch.

The controller is configured to perform voltage detection on the load to obtain the load voltage. The controller is further configured to: when it is determined that the load voltage is less than the first threshold and greater than the second threshold, and a voltage value of the load voltage is stable, send a generated fourth control signal to the seventh switch, where the seventh switch is turned on for preset duration and then turned off in response to the fourth control signal, so that the fifth switched capacitor enters an initial state; and the eighth switch is in an off state, so that the sixth switched capacitor enters the initial state. The controller is further configured to generate the switching signal based on the change trend of the load voltage and the value relationships between the load voltage and the first threshold and between the load voltage and the second threshold and send the switching signal to the switches in the third droop unit or the third overshoot unit, so that the fifth switched capacitor or the sixth switched capacitor releases the stored charge when the load voltage droops, and the fifth switched capacitor or the sixth switched capacitor absorbs the excess charge when the load voltage overshoots.

In this way, a switched capacitor of an LC circuit is used to implement voltage switching, and an energy loss can be greatly reduced.

In a possible implementation, there are a plurality of third droop units in the voltage switching module and a plurality of fifth switched capacitors are included, and/or there are a plurality of third overshoot units in the voltage switching module and a plurality of sixth switched capacitors are included. Two ends of each fifth switched capacitor are respectively connected to the load and a corresponding third droop unit, and two ends of each sixth switched capacitor are respectively connected to the load and a corresponding third overshoot unit.

The controller is further configured to determine a current control mode, to send the fourth control signal to a target droop unit corresponding to the current control mode and send the switching signal to the target droop unit or a target overshoot unit corresponding to the current control mode.

The current control mode is one of a plurality of alternative control modes. First thresholds and/or second thresholds of different alternative control modes are different. Alternative control modes corresponding to different third droop units are different. Alternative control modes corresponding to different third overshoot units are different. The target droop unit is a third droop unit, in the plurality of third droop units, whose alternative mode is the current control mode. The target overshoot unit is a third overshoot unit, in the plurality of third overshoot units, whose alternative mode is the current control mode.

These aspects and other aspects of this application are more concise and more comprehensive in descriptions of the following (a plurality of) embodiments.

## BRIEF DESCRIPTION OF DRAWINGS

The accompanying drawings included in this specification and constituting a part of this specification and this specification jointly show example embodiments, features, and aspects of this application, and are intended to explain principles of this application.

FIG. 1A is a schematic of a structure of a circuit in related technology 1;
FIG. 1B and FIG. 1C are respectively a curve diagram in a case without voltage droop mitigation and a curve diagram in a case with voltage droop mitigation in related technology 1;
FIG. 2 is a schematic of a structure of a circuit in related technology 2;
FIG. 3A is a schematic of a structure of a circuit in related technology 3;
FIG. 3B is a curve diagram in a case without voltage droop mitigation and a case with voltage droop mitigation in related technology 3;
FIG. 4 is a schematic of a structure of a voltage transient response control circuit according to an embodiment of this application;
FIG. 5A is a schematic of a structure of a voltage transient response control circuit in which Example 1 of a voltage switching module is used according to an embodiment of this application;
FIG. 5B is a curve diagram of a voltage transient response control circuit in which Example 1 of a voltage switching module is used in a case without voltage droop mitigation and in a case with voltage droop mitigation according to an embodiment of this application;
FIG. 6 is a schematic of a structure of a voltage transient response control circuit in which Example 2 of a voltage switching module is used according to an embodiment of this application;
FIG. 7A is a schematic of a voltage transient response control circuit in which Example 3 of a voltage switching module is used according to an embodiment of this application;

FIG. 7B is a schematic of a simplified structure of a circuit corresponding to Example 3 of a voltage switching module according to an embodiment of this application;

FIG. 7C and FIG. 7D are respectively a current change curve diagram and a voltage change curve diagram of a third switched capacitor in Example 3 of a voltage switching module in a case in which a fifth switch is continuously in an on state;

FIG. 7E and FIG. 7F are respectively a current change curve diagram and a voltage change curve diagram of a third switched capacitor in Example 3 of a voltage switching module in a case in which a fifth switch is turned on for 0.5 T within one T;

FIG. 7G is a curve diagram of a voltage transient response control circuit in which Example 3 of a voltage switching module is used in a case without voltage droop mitigation and in a case with voltage droop mitigation according to an embodiment of this application;

FIG. 8A is a schematic of a structure of a voltage transient response control circuit in which Example 4 of a voltage switching module is used according to an embodiment of this application;

FIG. 8B and FIG. 8C are respectively a current change curve diagram and a voltage change curve diagram of a fifth switched capacitor in Example 4 of a voltage switching module in a case in which an eighth switch is continuously in an on state;

FIG. 8D and FIG. 8E are respectively a current change curve diagram and a voltage change curve diagram of a fifth switched capacitor in Example 4 of a voltage switching module in a case in which an eighth switch is turned on for 0.5 T within one T.

FIG. 8F is a diagram of an on/off change of a seventh switch and an eighth switch in Example 4 of a voltage switching module in different periodicities T according to an embodiment of this application;

FIG. 8G is a curve diagram of a voltage transient response control circuit in which Example 4 of a voltage switching module is used in a case without voltage droop mitigation and in a case with voltage droop mitigation according to an embodiment of this application; and

FIG. 9 is a schematic of a structure of a voltage transient response control circuit in which Example 5 of a voltage switching module is used according to an embodiment of this application.

## DESCRIPTION OF EMBODIMENTS

The following describes various example embodiments, features, and aspects of this application in detail with reference to the accompanying drawings. Same reference signs in the accompanying drawings indicate elements that have same or similar functions.

Although various aspects of embodiments are shown in the accompanying drawings, unless otherwise particularly specified, the accompanying drawings do not need to be drawn to scale.

The specific term "example" herein means "used as an example, embodiment, or illustration". Any embodiment described as an "example" is not necessarily explained as being superior or better than other embodiments.

In addition, to better describe this application, numerous specific details are given in the following specific implementations. A person skilled in the art should understand that this application can also be implemented without some specific details. In some instances, methods, means, elements and circuits that are well-known to a person skilled in the art are not described in detail, so that the subject matter of this application is highlighted.

In a related technology, the foregoing problem is resolved in different manners. The following schematically describes different related technologies and problems existing in the different related technologies.

Related technology 1:

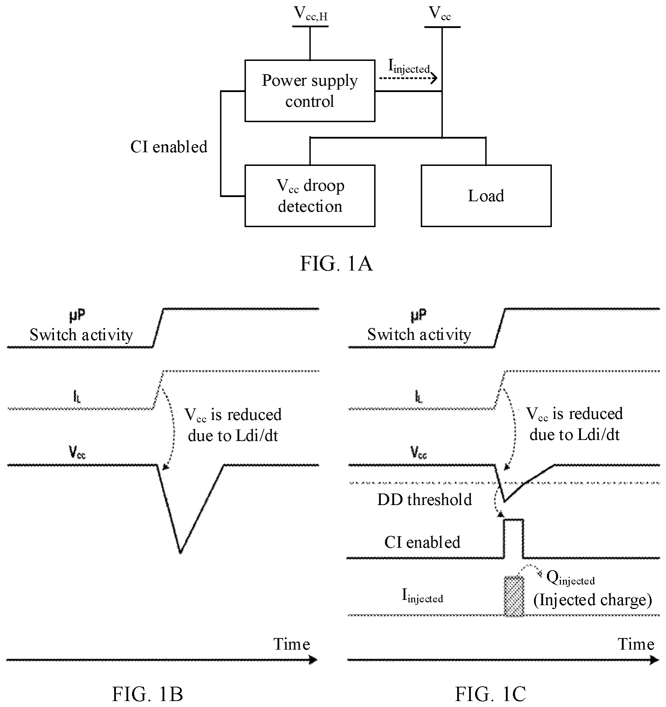

As shown in FIG. 1A to FIG. 1C, two power rails are provided in this solution. A second power rail (second power supply rail) $V_{cc}$ directly supplies power to a load (load). A voltage of the first power rail (first power supply rail) $V_{cc,H}$ is different from a voltage of a second voltage rail $V_{cc}$. The first power rail $V_{cc,H}$ does not work when the load is stable. When the load is switched from a light load to a heavy load in a short time, with reference to a curve diagram in a case without voltage droop mitigation and a curve diagram in a case with voltage droop mitigation shown in FIG. 1B, it can be learned that when a load voltage droops to a set threshold, the first power rail $V_{cc,H}$ is connected to supply power and inject a charge, to reduce a voltage droop amplitude. In FIG. 1B and FIG. 1C, an x-axis represents time, and a y-axis represents a voltage, a current, or a logic level (for example, 0 or 1). In FIG. 1B and FIG. 1C, voltage V droop behavior of a microprocessor (for example, the load) without a CI is compared with that of microprocessors with CIs in various embodiments. However, related technology 1 has the following problem: There is no module for absorbing the charge, and an overshoot of the load voltage cannot be controlled.

Related technology 2:

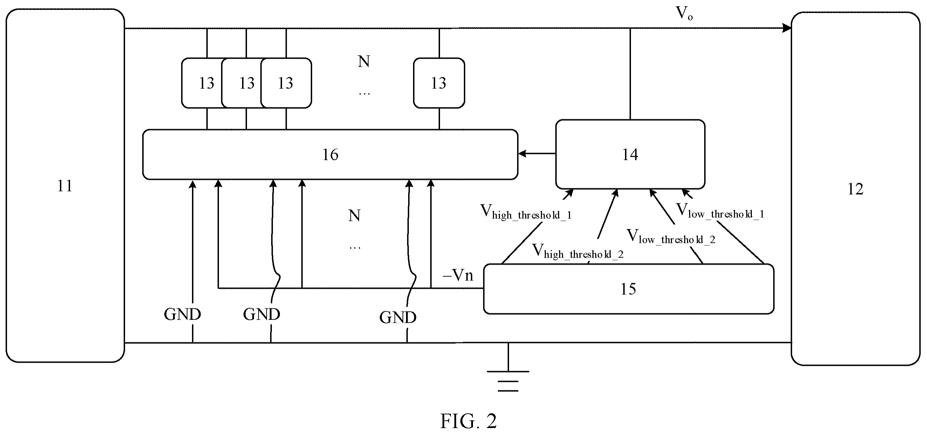

As shown in FIG. 2, in this solution, 11 represents a switching power converter, 12 represents a load, 13 represents a filter capacitor, 14 represents a collection control module, 15 represents a negative voltage generation module, and 16 represents a level control module. A negative-terminal voltage of the filter capacitor 13 is set to be adjustable. When a voltage droops, the load 12 switches the negative-terminal voltage of the filter capacitor 13 from a negative voltage to a ground and injects a charge; and when the voltage overshoots, the load 12 performs the opposite. The collection control module 14 is implemented by hysteresis comparators with different voltage thresholds or by an ADC combined with a digital chip, and the level control module 16 is implemented by a single-pole double-throw switch. However, related technology 2 has the following problem: In a working process, the negative voltage has higher voltage stress on a capacitor.

Related technology 3:

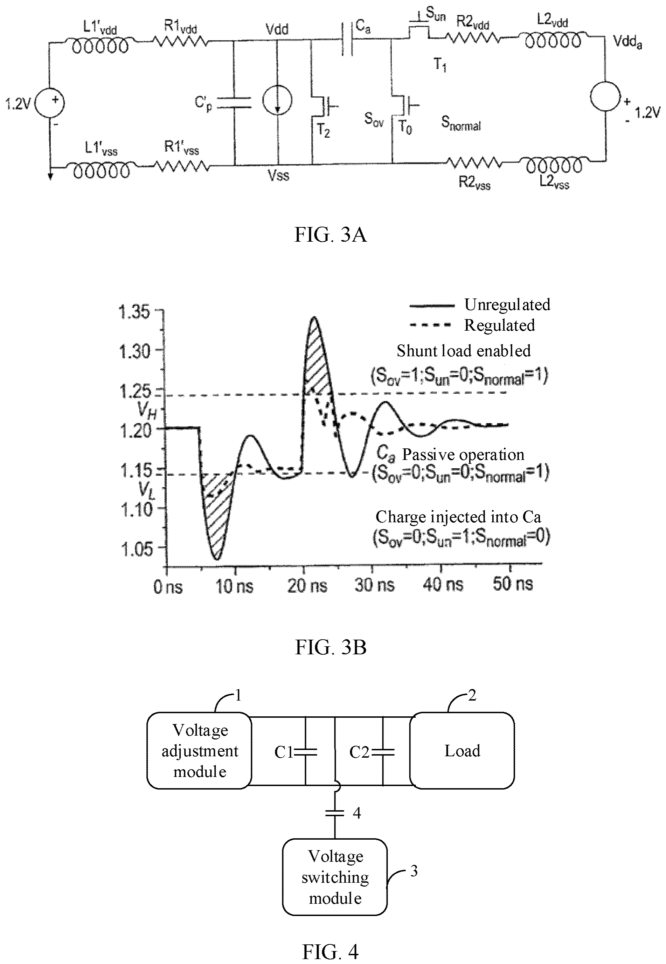

As shown in FIG. 3A and FIG. 3B, this solution is an on-chip voltage stabilization solution. A negative terminal of a capacitor is adjustable, and a switching transistor is used, to control an overshoot and a droop of a load voltage. When the load voltage is in a range near a rated voltage, a switching transistor $S_{ov}$ is turned off, $S_{un}$ is turned off, and $S_{normal}$ is turned on. When the load voltage droops below $V_L$, the switching transistor $S_{un}$ is turned on, $S_{normal}$ is turned off, and a voltage of a capacitor $C_a$ is reduced, to inject a charge into a load; and when the load voltage overshoots above $V_H$, the switching transistor $S_{ov}$ is turned on, to release an excess charge to a ground. However, related technology 3 has the following problem: In a working process, during voltage absorption, the charge is directly released to the ground, and an energy loss is large.

To resolve the foregoing technical problems, this application provides a voltage transient response control circuit. Transient response of a power supply can be improved, load capacitance is reduced, and control over an overshoot and a droop of a load voltage is implemented. In addition, a voltage may be used as a charge storage medium to absorb an excess charge generated when the load voltage overshoots and release the charge when the load droops, so that energy is more fully utilized.

As shown in FIG. 4, the voltage transient response control circuit provided in this embodiment of this application includes a voltage regulator module (Voltage Regulator Module, VRM) 1, a voltage switching module 3, and a switched capacitor 4. The voltage regulator module 1 and the voltage switching module 3 are connected to a load 2. Two ends of the switched capacitor 4 are respectively connected to the load 2 and the voltage switching module 3. In some embodiments, as shown in FIG. 4, the control circuit further includes a first capacitor C1 and a second capacitor C2. An input end and an output end of the first capacitor C1 are respectively connected to two ends of the voltage regulator module 1. An input end and an output end of the second capacitor C2 are respectively connected to two ends of the load 2.

The voltage regulator module 1 is configured to provide a low power supply voltage for the load 2 based on a power supply requirement of the load 2.

The voltage switching module 3 is configured to:

detect a load voltage of the load 2, generate a switching signal based on a change trend of the load voltage and value relationships between the load voltage and a first threshold and between the load voltage and a second threshold, and control, based on the switching signal, the switched capacitor 4 in the voltage switching module 3 to absorb an excess charge when the load voltage overshoots and release a stored charge when the load voltage droops. The first threshold and the second threshold may be set based on a transient response capability of the voltage regulator module 1 when the load 2 undergoes a large dynamic change.

In some embodiments, the voltage regulator module 1, the switched capacitor 4, and the voltage switching module 3 may be independent components that are disposed separately from each other. Alternatively, the voltage switching module 3 and the switched capacitor 4 may be circuit structures integrated in the voltage regulator module 1. A person skilled in the art may select and set hardware structures of the voltage regulator module 1, the switched capacitor 4, and the voltage switching module 3 based on an actual requirement. This is not limited in this application.

In this embodiment, scenarios to which the voltage transient response control circuit is applicable may be scenarios, such as a base station, a server, and a supercomputer, in which core chips need to be powered by a VRM that can output a large current and has strong transient response performance.

In this embodiment, to further describe an implementation of the voltage switching module 3 in this application, the following describes a working process and a working principle of the voltage switching module 3 by using five examples.

Example 1 of the voltage switching module:

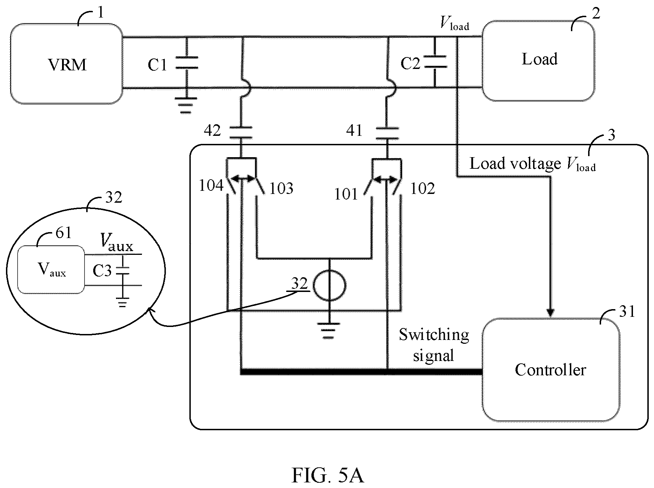

As shown in FIG. 5A, the switched capacitor 4 may include a first switched capacitor 41 and a second switched capacitor 42. The voltage switching module 3 may include a first droop unit, a first overshoot unit, an auxiliary power supply 32, and a controller 31. The first overshoot unit includes a first switch 101 and a second switch 102. The first droop unit includes a third switch 103 and a fourth switch 104. An output voltage $V_{aux}$ of the auxiliary power supply 31 is greater than 0. In some embodiments, the auxiliary power supply 32 may include a power supply module 61 and a capacitor C3. Two ends of the capacitor C3 are connected to a positive terminal and a negative terminal of the power supply module 61. One end of the first switched capacitor 41 is connected to the load 2, and the other end is connected to a common end of the first switch 101 and the second switch 102. The other end of the first switch 101 is connected to a positive terminal of the auxiliary power supply 32. The other end of the second switch 102 is connected to a ground. One end of the second switched capacitor 42 is connected to the load 2, and the other end is connected to a common end of the third switch 103 and the fourth switch 104. The other end of the third switch 103 is connected to the positive terminal of the auxiliary power supply 32. The other end of the fourth switch 104 is connected to the ground. A negative terminal of the auxiliary power supply 32 is grounded. The controller 31 is connected to the first switch 101, the second switch 102, the third switch 103, the fourth switch 104, and the load 2.

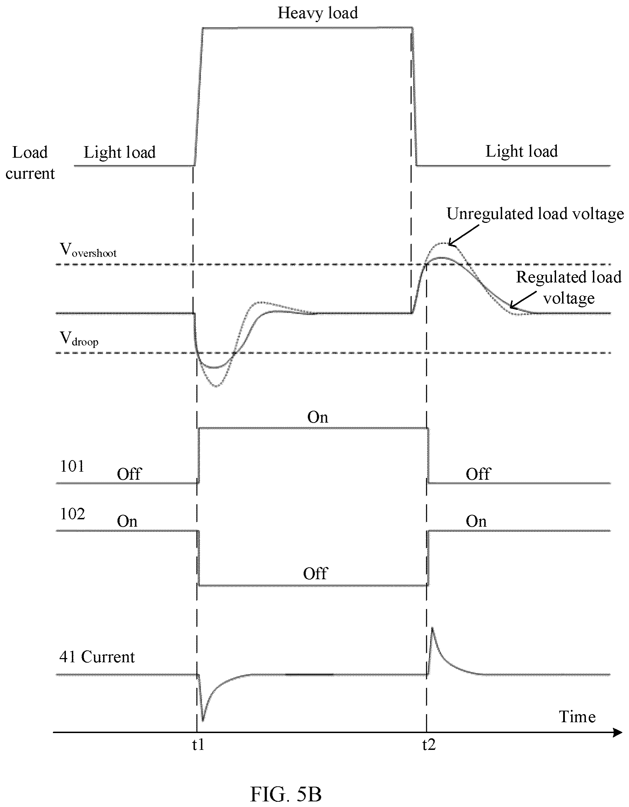

The following describes a working process and a working principle of Example 1 of the voltage switching module with reference to FIG. 5B.

After the voltage regulator module 1 starts to work, the voltage regulator module 1 provides a low power supply voltage for the load 2 based on a power supply requirement of the load 2. The controller 31 may perform voltage detection on the load 2 to obtain a load voltage $V_{load}$. When the controller 31 obtains the load voltage $V_{load}$ and determines that a voltage value of the load voltage $V_{load}$ is stable or determines that the voltage regulator module 1 and the load 2 are currently powered on and start to work, the controller 31 may generate a first control signal and a second control signal, send the first control signal to the first switch 101 and the second switch 102, and send the second control signal to the third switch 103 and the fourth switch 104. After receiving the first control signal, the first switch 101 is turned off in response to the first control signal. After receiving the first control signal, the second switch 102 is turned on in response to the first control signal. The first switched capacitor 41 enters an initial state. In this case, an input voltage of the first switched capacitor 41 is $V_{load}$. After receiving the second control signal, the third switch 103 is turned on in response to the second control signal. After receiving the second control signal, the fourth switch 104 is turned off in response to the second control signal. The second switched capacitor 42 enters the initial state. In this case, an input voltage of the second switched capacitor 42 is $(V_{load} - V_{aux})$. As shown in FIG. 5B, before a moment t1, after the voltage regulator module 1 starts to work, the load 2 is in a light-load state, and the first switch 101 and the second switch 102 are respectively turned off and on in response to the first control signal. An input voltage of the first switched capacitor 41 is $V_{load}$, and the first switched capacitor 41 starts to absorb a charge.

After the controller 31 controls the first switched capacitor 41 and the second switched capacitor 42 to enter the initial state, if the controller 31 determines that the load voltage $V_{load}$ gradually decreases to be less than or equal to a second threshold $V_{droop}$, that is, $V_{load} \leq V_{droop}$, the controller 31 may determine that the current load 2 is switched from the light-load state to a heavy-load state (that is, the load voltage droops), and may generate a first switching signal and send the first switching signal to the first switch 101 and the second switch 102. After receiving the first switching signal, the first switch 101 is turned on in response to the first switching signal. After receiving the first switching signal, the second switch 102 is turned off in response to the first switching signal. As shown in FIG. 5B, at the moment t1, the first switch 101 switches to an on state in response to the first switching signal, and the second switch 102 switches to an off state in response to the first switching signal. The input voltage of the first switched capacitor 41 changes from $V_{load}$ to $(V_{load} - V_{aux})$, a charge stored in the first switched capacitor 41 is released, and a current temporarily decreases and then rises to be stable, so that the load voltage $V_{load}$ is boosted. Further, if the controller 31 determines that the load voltage $V_{load}$ gradually increases to be greater than or equal to a first threshold $V_{overshoot}$, that is, $V_{load} \geq V_{overshoot}$, the controller 31 may determine that the current load 2 is switched from the heavy-load state to the light-load state (that is, the load voltage overshoots), and may generate a second switching signal and send the second switching signal to the first switch 101 and the second switch 102. After receiving the second switching signal, the first switch 101 is turned off in response to the second switching signal. After receiving the second switching signal, the second switch 102 is turned on in response to the second switching signal. As shown in FIG. 5B, at a moment t2, the first switch 101 switches to the off state in response to the second switching signal, and the second switch 102 switches to the on state in response to the second switching signal. The input voltage of the first switched capacitor 41 changes from $(V_{load} - V_{aux})$ to $V_{load}$, the first switched capacitor 41 starts to absorb the charge, and the current temporarily increases and then decreases to be stable, so that the load voltage $V_{load}$ is reduced.

After the controller 31 controls the first switched capacitor 41 and the second switched capacitor 42 to enter the initial state, if the controller 31 determines that the load voltage $V_{load}$ gradually increases to be greater than or equal to the first threshold $V_{overshoot}$, that is, $V_{load} \geq V_{overshoot}$, the controller 31 may determine that the current load 2 is switched from the heavy-load state to the light-load state (that is, the load voltage overshoots), and may generate a third switching signal and send the third switching signal to the third switch 103 and the fourth switch 104. After receiving the third switching signal, the third switch 103 is turned off in response to the third switching signal. After receiving the third switching signal, the fourth switch 104 is turned on in response to the third switching signal. The input voltage of the second switched capacitor 42 changes from $(V_{load} - V_{aux})$ to $V_{load}$, the second switched capacitor 42 starts to absorb the charge, and the current temporarily increases and then decreases to be stable, so that the load voltage $V_{load}$ is reduced. Further, if the controller 31 determines that the load voltage $V_{load}$ gradually decreases to be less than or equal to the second threshold $V_{droop}$, that is, $V_{load} \leq V_{droop}$, the controller 31 may determine that the current load 2 is switched from the light-load state to the heavy-load state (that is, the load voltage droops), and may generate a fourth switching signal and send the fourth switching signal to the third switch 103 and the fourth switch 104. After receiving the fourth switching signal, the third switch 103 is turned on in response to the fourth switching signal. After receiving the fourth switching signal, the fourth switch 104 is turned off in response to the fourth switching signal. The input voltage of the second switched capacitor 42 changes from $V_{load}$ to ($V_{load}$ - $V_{aux}$), the charge stored in the second switched capacitor 42 is released, and the current temporarily decreases and then rises to be stable, so that the load voltage $V_{load}$ is boosted.

In this way, in Example 1 of the voltage switching module, after the controller 31 controls, by using the first control signal and the second control signal, on/off of the switches in the voltage switching module 3 to further control the first switched capacitor 41 and the second switched capacitor 42 to enter the initial state, if the load 2 first enters a droop state, the switches in the first droop unit are controlled by using the switching signal to enable the first switched capacitor 41 releases the charge stored in the first switched capacitor 41. If the load 2 first enters an overshoot state, the switches in the first overshoot unit are controlled by using the switching signal to enable the second switched capacitor 42 to start to absorb the charge. It is ensured that the voltage transient response control circuit can implement control of the load in response to a working state in which the load first overshoots and then droops and a working state in which the load first droops and then overshoots.

Example 2 of the voltage switching module:

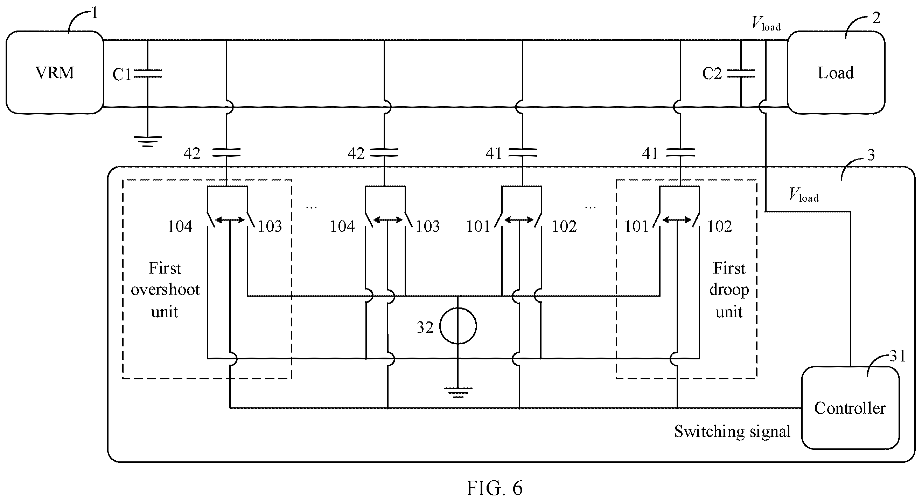

As shown in FIG. 6, a difference between Example 2 of the voltage switching module and Example 1 of the voltage switching module lies in that: The voltage switching module 3 may include a plurality of first droop units and/or a plurality of first overshoot units. A plurality of first switched capacitors 41 may also be included, and a plurality of second switched capacitors 42 may also be included. A quantity of first switched capacitors 41 is consistent with a quantity of first droop units, and a quantity of second switched capacitors 42 is consistent with a quantity of first overshoot units. Different first overshoot units correspond to different first thresholds $V_{overshoot}$ and/or second thresholds $V_{droop}$, and different first droop units correspond to different first thresholds $V_{overshoot}$ and/or second thresholds $V_{droop}$. Two ends of each first switched capacitor 41 are respectively connected to the load 2 and a common end of a first switch 101 and a second switch 102 in a corresponding first droop unit. Two ends of each second switched capacitor 42 are respectively connected to the load 2 and a common end of a third switch 103 and a fourth switch 104 in a corresponding first overshoot unit.

After the voltage regulator module 1 starts to work, the voltage regulator module 1 provides a low power supply voltage for the load 2 based on a power supply requirement of the load 2. The controller 31 may perform voltage detection on the load 2 to obtain a load voltage $V_{load}$. The controller 31 is further configured to determine a target overshoot unit from the plurality of first overshoot units and determine a target droop unit from the plurality of first droop units based on a current control mode that is selected from a plurality of alternative control modes in advance based on a power supply requirement and/or a selection operation of a user. Different alternative control modes correspond to different first thresholds $V_{overshoot}$ and/or second thresholds $V_{droop}$. In different alternative control modes, the first overshoot units and the first droop units that need to work in the voltage switching module 3 are different. The target droop unit is a first droop unit, in the plurality of first droop units, whose alternative mode is the current control mode. The target overshoot unit is a first overshoot unit, in the plurality of first overshoot units, whose alternative mode is the current control mode. After determining the target overshoot unit and the target droop unit, the controller 31 respectively sends a first control signal and a second control signal to the target droop unit and the target overshoot unit. In addition, after generating the switching signal based on the load voltage $V_{load}$, the controller 31 sends the switching signal to each switch corresponding to the target droop unit or the target overshoot unit. A working principle and a working process of the controller 31 in the current control mode are similar to the working process of the controller 31 in Example 1 of the voltage switching module. Refer to the foregoing description. Details are not described herein again.

Example 3 of the voltage switching module:

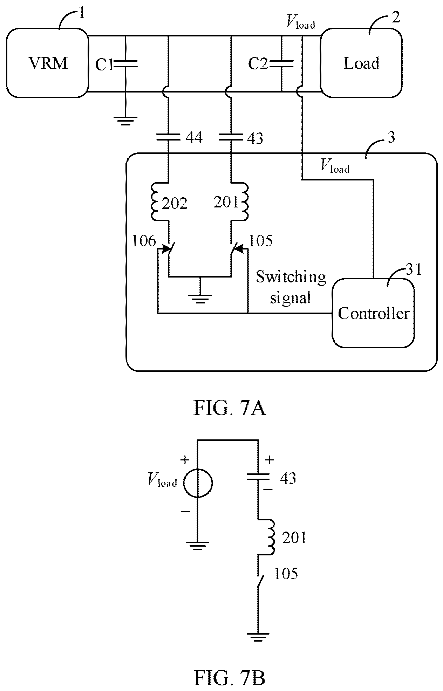

As shown in FIG. 7A, the switched capacitor 4 may include a third switched capacitor 43 and a fourth switched capacitor 44. The voltage switching module 3 may include a second droop unit, a second overshoot unit, and a controller 31. The second droop unit includes a first inductor 201 and a fifth switch 105. The second overshoot unit includes a second inductor 202 and a sixth switch 106. The third switched capacitor 43, the first inductor 201, and the fifth switch 105 are connected in series and then connected between the load 2 and a ground. The fourth switched capacitor 44, the second inductor 202, and the sixth switch 106 are connected in series and then connected between the load 2 and the ground. The controller 31 is connected to the load 2, the fifth switch 105, and the sixth switch 106.

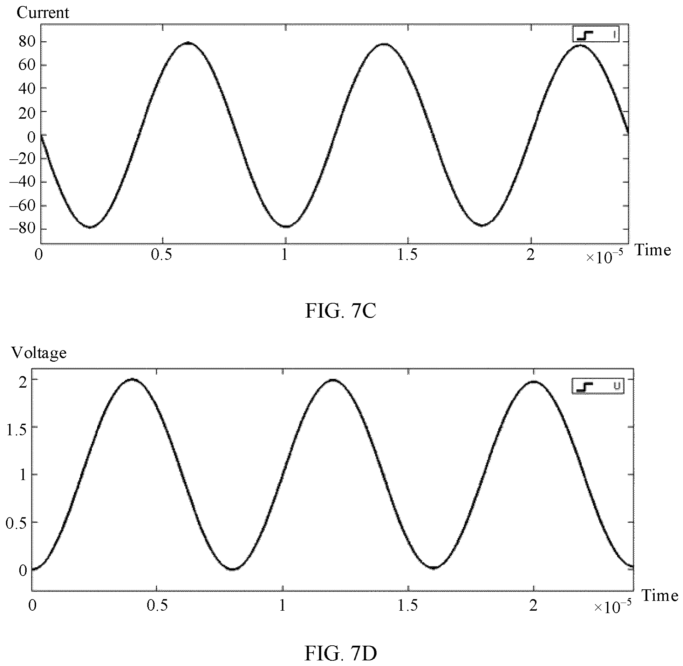

In a short time length, for ease of understanding, a voltage of the load 2 may be simplified as a constant voltage source $V_{load}$ shown in FIG. 7B. An initial voltage of the third switched capacitor 43 is 0, and after the fifth switch 105 is closed and turned on, LC resonance is generated in a branch shown in FIG. 7B. As shown in FIG. 7C and FIG. 7D, both a current and a voltage on the third switched capacitor 43 change in a trigonometric function manner (where the voltage has a direct current bias $V_{load}$), and a change periodicity satisfies

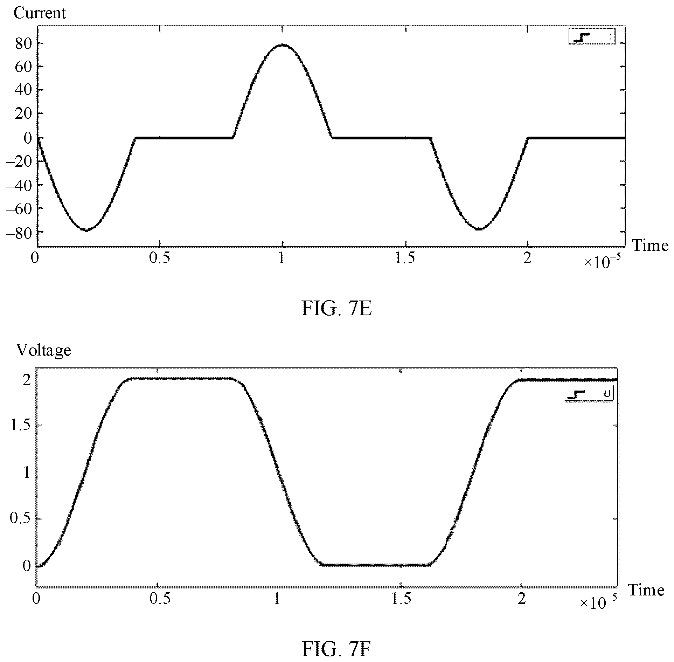

$$T = 2\pi\sqrt{LC}$$ . Within one periodicity T, the fifth switch 105 changes from being controlled to be always on to being controlled to be on for half of the time and off for half of the time. In this case, changes of the current and the voltage on the third switched capacitor 43 are respectively shown in FIG. 7E and FIG. 7F. As shown in FIG. 7E and FIG. 7F, when the fifth switch 105 is turned on for the first time, the voltage on the third switched capacitor 43 changes from 0 to $2V_{load}$, and the third switched capacitor 43 absorbs a charge to reduce the load voltage. When the fifth switch 105 is turned on for the second time, the voltage on the third switched capacitor 43 changes from $2V_{load}$ to 0, and the third switched capacitor 43 releases a charge to boost the load voltage. When the fifth switch 105 is turned on for the third time, the voltage on the third switched capacitor 43 changes from 0 to $2V_{load}$, and the third switched capacitor 43 continues to absorb the charge. This cycle repeats. In the cycle, as shown in FIG. 7E and FIG. 7F, when the fifth switch 105 is turned off, both the voltage and the current on the third switched capacitor 43 do not change. Therefore, an off time of the fifth switch 105 may be set to any length, and on duration needs to be fixed to 0.5 T. Similarly, in a process in which the sixth switch 106 is turned on and off for a plurality of times similar to that of the fifth switch 105, the fourth switched capacitor 44 also implements a charging/-discharging process similar to that of the third switched capacitor 43.

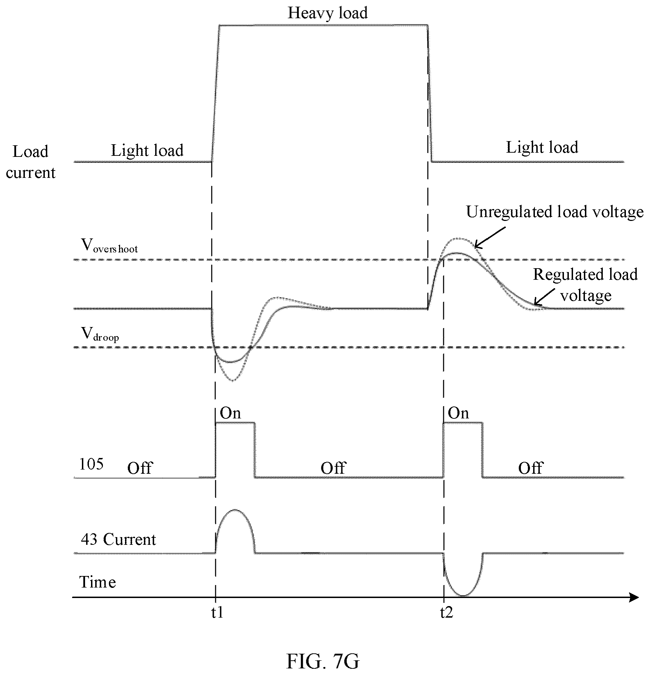

Based on the foregoing, the following describes a working process and a working principle of Example 3 of the voltage switching module with reference to FIG. 7G.

After the voltage regulator module 1 starts to work, the voltage regulator module 1 provides a low power supply voltage for the load 2 based on a power supply requirement of the load 2. The controller 31 may perform voltage detection on the load 2 to obtain a load voltage $V_{load}$. When the controller 31 obtains the load voltage $V_{load}$ and determines that a voltage value of the load voltage $V_{load}$ is stable or determines that the voltage regulator 1 and the load 2 are powered on and start to work, the controller 31 may generate a third control signal based on the detected load voltage $V_{load}$ and send the third control signal to the fifth switch 105. The third control signal indicates the fifth switch 105 to be turned on for preset duration and then turned off, and the preset duration is 0.5 T, where T is a change periodicity of the LC resonance. After receiving the third control signal, the fifth switch 105 is turned on for the preset duration and then turned off in response to the third control signal, so that the third switched capacitor 43 enters an initial state. As shown in FIG. 7G, before a moment t1, after the voltage regulator module 1 starts to work, the load 2 is in a light-load state, and the fifth switch 105 is turned on for 0.5 T and then turned off in response to the third control signal. An input voltage of the third switched capacitor 43 changes from 0 to $2V_{load}$ (as shown in FIG. 7F), and the third switched capacitor 43 enters the initial state to absorb the charge (not shown in FIG. 7G). The sixth switch 106 may be preset to be in an off state when no control signal is received, so that the fourth switched capacitor 44 can enter the initial state. Alternatively, the controller 31 may further generate an off control signal when determining that the load 2 does not start to work, and send the off control signal to the sixth switch 106, and the sixth switch 106 is turned off in response to the received off control signal, so that the fourth switched capacitor 44 can enter the initial state.

After the controller 31 determines that the third switched capacitor 43 and the fourth switched capacitor 44 are in the initial state, if the controller 31 determines that the load voltage $V_{load}$ gradually decreases to be less than or equal to a second threshold $V_{droop}$, that is, $V_{load} \leq V_{droop}$, the controller 31 may determine that the current load 2 changes from the light-load state to a heavy-load state (that is, the load voltage droops), and may further generate a fifth switching signal and send the fifth switching signal to the fifth switch 105. As shown in FIG. 7G, at the moment t1, the fifth switch 105 is turned on for 0.5 T and then turned off in response to the fifth switching signal. The input voltage of the third switched capacitor 43 changes from $2V_{load}$ to 0 (as shown in FIG. 7F), a charge stored in the third switched capacitor 43 is released, and the current changes in a trigonometric function manner shown in FIG. 7G, so that the load voltage $V_{load}$ is boosted. Further, the controller 31 continues to detect the load voltage $V_{load}$. If the controller 31 determines that the load voltage $V_{load}$ gradually increases to be greater than or equal to a first threshold $V_{overshoot}$, that is, $V_{load} \geq V_{overshoot}$, the controller 31 may determine that the current load 2 is switched from the heavy-load state to the light-load state (that is, the load voltage overshoots), and may generate the fifth switching signal and send the fifth switching signal to the fifth switch 105. After receiving the fifth switching signal, the fifth switch 105 is turned on for the preset duration and then turned off in response to the fifth switching signal. As shown in FIG. 7G, at a moment t2, the fifth switch 105 is turned on for 0.5 T and then turned off in response to the fifth switching signal. The input voltage of the third switched capacitor 43 changes from 0 to $2V_{load}$ (as shown in FIG. 7F), the third switched capacitor 43 starts to absorb the charge, and the current changes in a trigonometric function manner shown in FIG. 7G, so that the load voltage $V_{load}$ is reduced.

After the controller 31 determines that the third switched capacitor 43 and the fourth switched capacitor 44 are in the initial state, if the controller 31 determines that the load voltage $V_{load}$ gradually increases to be greater than or equal to the first threshold $V_{overshoot}$, that is, $V_{load} \geq V_{overshoot}$, the controller 31 may determine that the current load 2 is switched from the heavy-load state to the light-load state (that is, the load voltage overshoots), and may generate a sixth switching signal and send the sixth switching signal to the sixth switch 106. After receiving the sixth switching signal, the sixth switch 106 is turned on for the preset duration (for example, 0.5 T) and then turned off in response to the sixth switching signal. An input voltage of the fourth switched capacitor 44 changes from 0 to $2V_{load}$, the fourth switched capacitor 44 starts to absorb the charge, and the current changes in the trigonometric function manner shown in FIG. 7G, so that the load voltage $V_{load}$ is reduced. Further, the controller 31 continues to detect the load voltage $V_{load}$. If the controller 31 determines that the load voltage $V_{load}$ gradually decreases to be less than or equal to the second threshold $V_{droop}$, that is, $V_{load} \leq V_{droop}$, the controller 31 may determine that the current load 2 changes from the light-load state to the heavy-load state (that is, the load voltage droops), and may further generate the sixth switching signal and send the sixth switching signal to the sixth switch 106. After receiving the sixth switching signal, the sixth switch 106 is turned on for the preset duration (for example, 0.5 T) and then turned off in response to the sixth switching signal. The input voltage of the fourth switched capacitor 44 changes from $2V_{load}$ to 0 (as shown in FIG. 7F), a charge stored in the fourth switched capacitor 44 is released, and the current changes in the trigonometric function manner shown in FIG. 7G, so that a load voltage $V_{load}$ is boosted.

In this way, in Example 3 of the voltage switching module, after the controller 31 controls, by using the third control signal, on/off of the fifth switch in the voltage switching module 3 to further control the third switched capacitor 43 and the fourth switched capacitor 44 to enter the initial state, if the load 2 first enters a droop state, the switch in the second droop unit is controlled by using the switching signal to enable the third switched capacitor 43 to release the charge stored in the third switched capacitor 43. If the load 2 first enters an overshoot state, the switch in the second overshoot unit is controlled by using the switching signal to enable the fourth switched capacitor 44 to start to absorb the charge. It is ensured that the voltage transient response control circuit can implement control of the load in response to a working state in which the load first overshoots and then droops and a working state in which the load first droops and then overshoots.

In a possible implementation, there may be a plurality of second droop units in the voltage switching module 3 and a plurality of third switched capacitors are included, and/or there may be a plurality of second overshoot units in the voltage switching module and a plurality of fourth switched capacitors may be included. Two ends of each third switched capacitor are respectively connected to the load and a first inductor in a corresponding second droop unit, and two ends of each fourth switched capacitor are respectively connected to the load and a second inductor in a corresponding second overshoot unit. The controller 31 is further configured to determine a current control mode, to send the third control signal to a target droop unit corresponding to the current control mode and send the switching signal to the target droop unit or a target overshoot unit corresponding to the current control mode.

The current control mode is one of a plurality of alternative control modes. First thresholds and/or second thresholds of different alternative control modes are different. Alternative control modes corresponding to different second droop units are different. Alternative control modes corresponding to different second overshoot units are different. The target droop unit is a second droop unit, in the plurality of second droop units, whose alternative mode is the current control mode. The target overshoot unit is a second overshoot unit, in the plurality of second overshoot units, whose alternative mode is the current control mode. A manner of determining the target droop unit and determining the target overshoot unit is similar to that in Example 2 of the voltage switching module. Refer to the foregoing description. Details are not described again.

Example 4 of the voltage switching module:

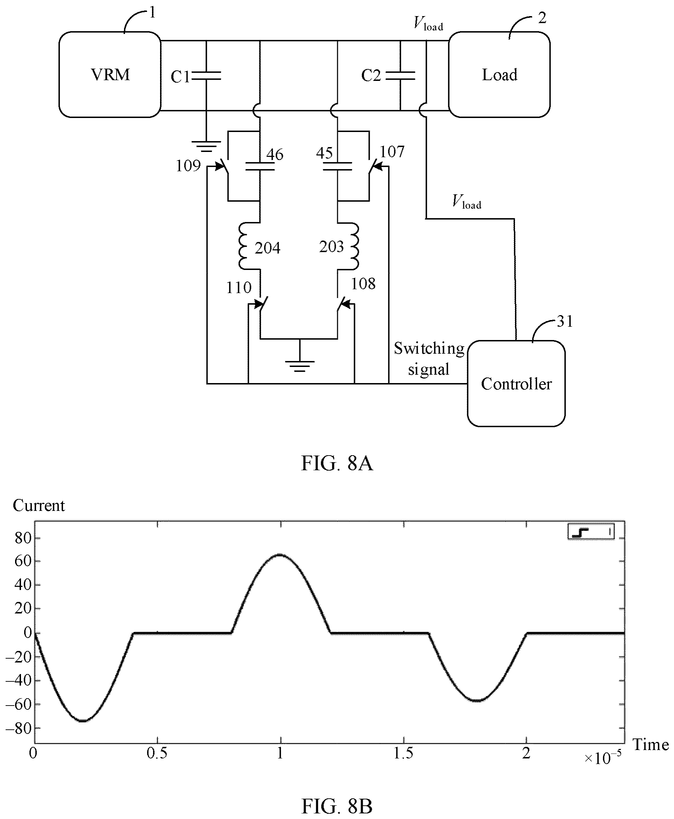

As shown in FIG. 8A, the switched capacitor 4 may include a fifth switched capacitor 45 and a sixth switched capacitor 46. The voltage switching module 3 may include a third droop unit, a fourth droop unit, and a controller 31. The third droop unit includes a third inductor 203, a seventh switch 107, and an eighth switch 108. The third overshoot unit includes a fourth inductor 204, a ninth switch 109, and a tenth switch 110. The third droop unit further includes an equivalent resistance. The equivalent resistance is a total resistance of a sum of a switch-on resistance, parasitic resistances of a capacitor and an inductor, and a resistance of a circuit board trace in the third droop unit. Similarly, the third overshoot unit further includes an equivalent resistance. The equivalent resistance is a total resistance of a sum of a switch-on resistance, parasitic resistances of a capacitor and an inductor, and a resistance of a circuit board trace in the third overshoot unit. The fifth switched capacitor 45, the third inductor 203, and the eighth switch 108 are connected in series and then connected between the load 2 and a ground. The seventh switch 107 is connected in parallel to the fifth switched capacitor 45. The sixth switched capacitor 46, the fourth inductor 204, and the ninth switch 109 are connected in series and then connected between the load 2 and the ground. The tenth switch 110 is connected in parallel to the sixth switched capacitor 46. The controller 31 is connected to the load 2, the seventh switch 107, the eighth switch 108, the ninth switch 109, and the tenth switch 110.

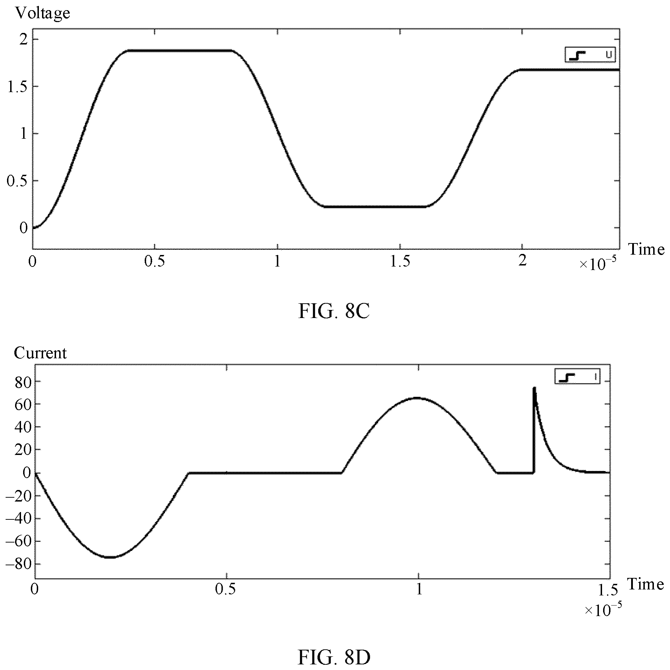

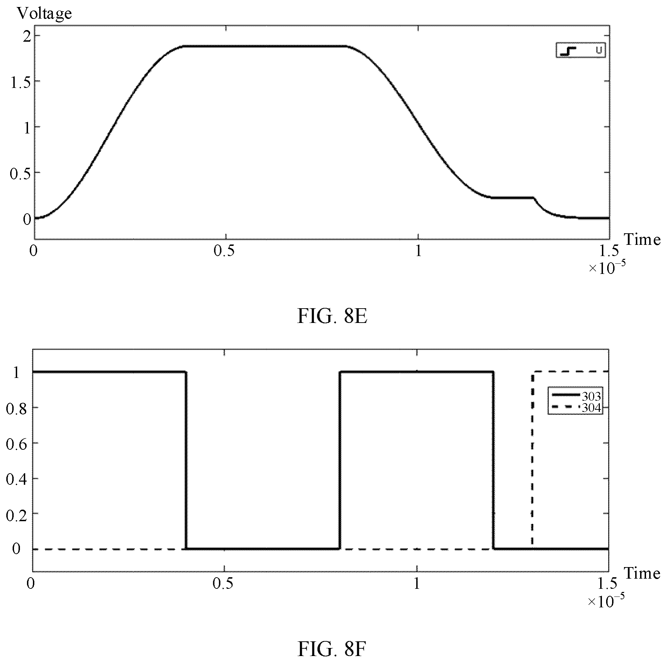

The same as Example 3 of the voltage switching module, the load voltage is simplified as the constant voltage source for discussion. An initial voltage of the fifth switched capacitor 45 is 0, the eighth switch 108 is closed, and the seventh switch 107 is turned off. In this case, a damping coefficient of an entire RLC series branch satisfies $\zeta = \frac{R}{2}\sqrt{\frac{C}{L}}$. Proper components may be selected, and a PCB is properly laid out, so that $\zeta < 1$ (a value should be as small as possible). In this case, a branch where the voltage switching module 3 is located is in an underdamped state. As shown in FIG. 8B and FIG. 8C, both a current and a voltage on the fifth switched capacitor 45 change in a manner of damped oscillation (where the voltage has a direct current bias $V_{load}$). When $\zeta \ll 1$, an oscillation periodicity satisfies $T = 2\pi\sqrt{LC}$. Within one periodicity T, the eighth switch 108 changes from being controlled to be always on to being controlled to be on for half of the time and off for half of the time (as shown in FIG. 8F). In this case, changes of the current and the voltage on the fifth switched capacitor 45 are respectively shown in FIG. 8D and FIG. 8E. It can be seen from FIG. 8D and FIG. 8E that, in this case, the fifth switched capacitor 45 still absorbs a charge when the eighth switch 108 is turned on for an odd number of times and releases a charge when the eighth switch 108 is turned on for an even number of times. However, because the fifth switched capacitor 45 undergoes damped oscillation, a capability of absorbing and releasing the charge is attenuated continuously. Therefore, after the eighth switch 108 is turned on for the even number of times, the eighth switch 108 is turned on for a short time, and the fifth switched capacitor 45 is reset, to restore the capability of absorbing and releasing the charge of the fifth switched capacitor 45. Effect is shown in FIG. 8D and FIG. 8E.

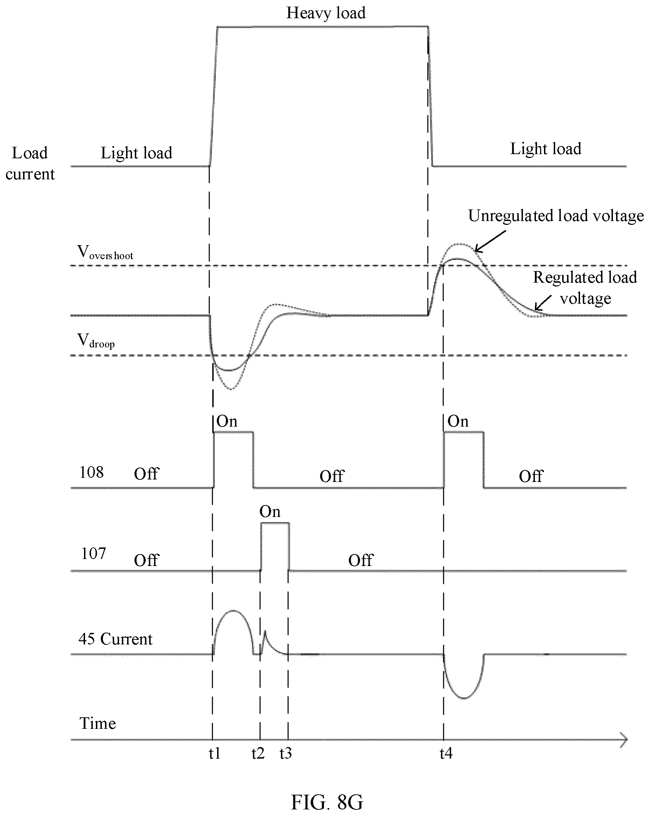

Based on the foregoing, the following describes a working process and a working principle of Example 4 of the voltage switching module with reference to FIG. 8G.

After the voltage regulator module 1 starts to work, the voltage regulator module 1 provides a low power supply voltage for the load 2 based on a power supply requirement of the load 2. The controller 31 may perform voltage detection on the load 2 to obtain a load voltage $V_{load}$. After the controller 31 obtains the load voltage $V_{load}$ and determines that a voltage value of the load voltage $V_{load}$ is stable or determines that the voltage regulator 1 and the load 2 are powered on and start to work, the controller 31 may generate a fourth control signal based on the detected load voltage $V_{load}$ and send the fourth control signal to the eighth switch 108 or send the fourth control signal to the eighth switch 108 and the seventh switch 107. The fourth control signal indicates the eighth switch 108 to be turned on for preset duration and then turned off, and the preset duration is 0.5 T, where T is a change periodicity of LC resonance. In some embodiments, the fourth control signal further indicates the seventh switch 107 to continue to remain in an off state. After receiving the fourth control signal, the eighth switch 108 is turned on for the preset duration and then turned off in response to the fourth control signal. If receiving the fourth control signal, the eighth switch 108 continues to remain in the off state, and if the eighth switch 108 does not receive the fourth control signal, the eighth switch 108 also continues to remain in the off state, so that the fifth switched capacitor 45 enters the initial state. As shown in FIG. 8G, before a moment t1, after the voltage regulator module 1 starts to work, the load 2 is in a light-load state, and the eighth switch 108 is turned on for 0.5 T and then turned off in response to the fourth control signal. An input voltage of the fifth switched capacitor 45 changes to a high voltage, and the fifth switched capacitor 45 enters an initial state to absorb the charge (not shown in FIG. 8G). In some embodiments, the ninth switch 109 and the tenth switch 110 may be preset to be in the off state when no control signal is received, so that the sixth switched capacitor 46 can enter the initial state. Alternatively, the controller 31 may further generate an off control signal when determining that the load 2 does not start to work and send the off control signal to the ninth switch 109 and the tenth switch 110, and the ninth switch 109 and the tenth switch 110 are turned off in response to the received off control signal, so that the sixth switched capacitor 46 can enter the initial state.

After the controller 31 determines that the fifth switched capacitor 45 and the sixth switched capacitor 46 enter the initial state, if the controller 31 determines that the load voltage $V_{load}$ gradually decreases to be less than or equal to a second threshold $V_{droop}$, that is, $V_{load} \leq V_{droop}$, the controller 31 may determine that the current load 2 changes from the light-load state to a heavy-load state (that is, the load voltage droops), and may generate a seventh switching signal and an eighth switching signal. In addition, after it is determined that the eighth switch 108 completes execution of the seventh switching signal, the eighth switching signal is sent to the seventh switch 107. The seventh switching signal indicates the eighth switch 108 to be turned on for the preset duration and then turned off, and the preset duration may be 0.5 T. The eighth switching signal indicates the seventh switch 107 to be turned on for short time duration and then turned off, where the short time duration is set based on duration required for the fifth switched capacitor 45 to complete reset, so that the fifth switched capacitor 45 can complete reset in a process in which the seventh switch 107 is temporarily turned on and then turned off. As shown in FIG. 8G, at the moment t1, the eighth switch 108 is turned on for 0.5 T and then turned off in response to the seventh switching signal. If the input voltage of the fifth switched capacitor 45 increases, a charge stored in the fifth switched capacitor 45 is released, and the current changes as shown in FIG. 8G, so that the load voltage $V_{load}$ is boosted. Then, after the eighth switch 108 is turned off, the seventh switch 107 is turned on for the short time duration and then turned off, so that the fifth switched capacitor 45 is reset. As shown in FIG. 8G, between a moment t2 and a moment t3, the seventh switch 107 is turned on for the short time duration and then turned off in response to the eighth switching signal, and the fifth switched capacitor 45 is reset. Further, the controller 31 continues to detect the load voltage $V_{load}$. If the controller 31 determines that the load voltage $V_{load}$ gradually increases to be greater than or equal to a first

threshold $V_{overshoot}$, that is, $V_{load} \geq V_{overshoot}$, the controller 31 may determine that the current load 2 is switched from the heavy-load state to the light-load state (that is, the load voltage overshoots), and may generate the seventh switching signal. After receiving the seventh switching signal, the eighth switch 108 is turned on for the preset duration and then turned off in response to the seventh switching signal. As shown in FIG. 8G, at a moment t4, the eighth switch 108 is turned on for 0.5 T and then turned off in response to the seventh switching signal. The input voltage of the fifth switched capacitor 45 changes from 0 to a high voltage, the fifth switched capacitor 45 starts to absorb the charge, and the current changes in a trigonometric function manner shown in FIG. 8G, so that the load voltage $V_{load}$ is reduced.

After the controller 31 determines that the fifth switched capacitor 45 and the sixth switched capacitor 46 enter the initial state, if the controller 31 determines that the load voltage $V_{load}$ gradually increases to be greater than or equal to the first threshold $V_{overshoot}$, that is, $V_{load} \geq V_{overshoot}$, the controller 31 may determine that the current load 2 is switched from the heavy-load state to the light-load state (that is, the load voltage overshoots), and may generate a ninth switching signal. After receiving the ninth switching signal, the tenth switch 110 is turned on for the preset duration (for example, 0.5 T) and then turned off in response to the ninth switching signal. The ninth switching signal indicates the tenth switch 110 to be turned on for the preset duration and then turned off, and the preset duration may be 0.5 T. An input voltage of the sixth switched capacitor 46 changes from 0 to a high voltage, the sixth switched capacitor 46 starts to absorb the charge, and the current changes in the trigonometric function manner shown in FIG. 8G, so that the load voltage $V_{load}$ is reduced. Further, the controller 31 continues to detect the load voltage $V_{load}$. If the controller 31 determines that the load voltage $V_{load}$ gradually decreases to be less than or equal to the second threshold $V_{droop}$, that is, $V_{load} \leq V_{droop}$, the controller 31 may determine that the current load 2 changes from the light-load state to the heavy-load state (that is, the load voltage droops), and may generate the ninth switching signal and a tenth switching signal. In addition, after it is determined that the tenth switch 110 completes execution of the ninth switching signal, the tenth switching signal is sent to the ninth switch 109. The tenth switching signal indicates the ninth switch 109 to be turned on for the short time duration and then turned off, where the short time duration is set based on duration required for the sixth switched capacitor 46 to complete reset, so that the sixth switched capacitor 46 can complete reset in a process in which the ninth switch 109 is temporarily turned on and then turned off. The tenth switch 110 is turned on for 0.5 T and then turned off in response to the ninth switching signal. If the input voltage of the sixth switched capacitor 106 increases, a charge stored in the sixth switched capacitor 46 is released, and the current changes as shown in FIG. 8G, so that the load voltage $V_{load}$ is boosted. Then, after the tenth switch 110 is turned off, the ninth switch 109 is turned on for the short time duration and then turned off, so that the sixth switched capacitor 46 is reset.

In this way, in Example 4 of the voltage switching module, after the controller 31 controls, by using the fourth control signal, on/off of the eighth switch in the voltage switching module 3 to further control the fifth switched capacitor 45 and the sixth switched capacitor 46 to enter the initial state, if the load 2 first enters a droop state, the switches in the third droop unit are controlled by using the switching signal to enable the fifth switched capacitor 45 to release the charge stored in the fifth switched capacitor 45. If the load 2 first enters an overshoot state, the switches in the third overshoot unit are controlled by using the switching signal to enable the sixth switched capacitor 46 to start to absorb the charge. It is ensured that the voltage transient response control circuit can implement control of the load in response to a working state in which the load first overshoots and then droops and a working state in which the load first droops and then overshoots.

Example 5 of the voltage switching module:

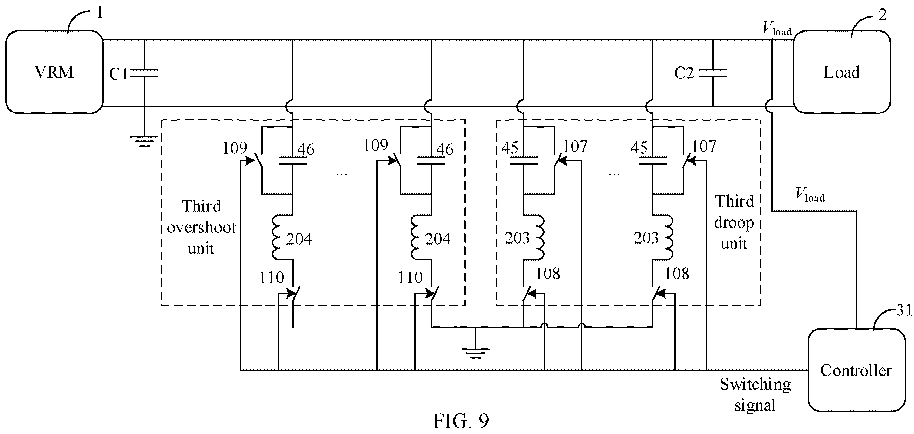

As shown in FIG. 9, a difference between Example 5 of the voltage switching module and Example 4 of the voltage switching module lies in that: The voltage switching module 3 may include a plurality of third droop units and/or a plurality of third overshoot units. A plurality of first switched capacitors 41 may also be included, and a plurality of second switched capacitors 42 may also be included. Two ends of each fifth switched capacitor 45 are respectively connected to the load 2 and a corresponding third droop unit, and two ends of each sixth switched capacitor 46 are respectively connected to the load 2 and a corresponding third overshoot unit.

The controller 31 is further configured to determine a current control mode, to send a fourth control signal to a target droop unit corresponding to the current control mode and send a switching signal to the target droop unit or a target overshoot unit corresponding to the current control mode. The current control mode is one of a plurality of alternative control modes. First thresholds and/or second thresholds of different alternative control modes are different. Alternative control modes corresponding to different third droop units are different. Alternative control modes corresponding to different third overshoot units are different. The target droop unit is a third droop unit, in the plurality of third droop units, whose alternative mode is the current control mode. The target overshoot unit is a third overshoot unit, in the plurality of third overshoot units, whose alternative mode is the current control mode. A manner of determining the target droop unit and determining the target overshoot unit is similar to that in Example 2 of the voltage switching module. Refer to the foregoing description. Details are not described again.

In a possible implementation, when a change of a working status of a load can be determined in advance, only a droop unit or an overshoot unit may be disposed in the voltage switching module 3. For example, if a load first droops and then overshoots when a working status of the load changes from a non-working state to a working state, only a droop unit may be disposed in the voltage switching module 3. There may be one or more droop units, and each droop unit may be any one of the first droop unit, the second droop unit, and the third droop unit. When there are a plurality of droop units, the droop units may be the same or different. If a load first overshoots and then droops when a working status of the load changes from a non-working state to a working state, only an overshoot unit may be disposed in the voltage switching module 3. There may be one or more overshoot units, and each overshoot unit may be any one of the first overshoot unit, the second overshoot unit, and the third overshoot unit. When there are a plurality of overshoot units, the overshoot units may be the same or different.

In a possible implementation, when the voltage switching module 3 includes a droop unit and an overshoot unit, structures of the droop unit and the overshoot unit may be the same or different. For example, the voltage switching module 3 may include the first droop unit and the second overshoot unit. The voltage switching module 3 may include the third droop unit and the second overshoot unit. When the voltage switching module 3 includes a plurality of droop units and/or a plurality of overshoot units, structures of the droop units may be the same or different, and structures of the overshoot units may be the same or different. For example, the voltage switching module 3 may include the first droop unit, the third droop unit, and two second overshoot units. The voltage switching module 3 may include the second droop unit, the third droop unit, the second overshoot unit, and the third overshoot unit.

The flowcharts and block diagrams in the accompanying drawings show possible implementations of system architectures, functions, and operations of apparatuses, systems, methods, and computer program products according to a plurality of embodiments of this application. In this regard, each block in the flowcharts or block diagrams may represent a module, a program segment, or a part of instructions, and the module, the program segment, or the part of the instructions includes one or more executable instructions for implementing a specified logical function. In some alternative implementations, a function marked in the block may also occur in a sequence different from that marked in the accompanying drawings. For example, two consecutive blocks may actually be executed substantially in parallel, and may sometimes be executed in a reverse order, depending on a related function.

It should also be noted that each block of the block diagrams and/or flowcharts, and a combination of blocks of the block diagrams and/or flowcharts may be implemented by hardware (for example, a circuit or an ASIC (Application-Specific Integrated Circuit, application-specific integrated circuit)) that performs a corresponding function or action, or may be implemented by a combination of hardware and software, for example, firmware.

Although the present invention is described with reference to embodiments, in a process of implementing the present invention that claims protection, a person skilled in the art may understand and implement another variation of the disclosed embodiments by viewing the accompanying drawings, disclosed content, and the appended claims. In the claims, "comprising" (comprising) does not exclude another component or another step, and "a" or "one" does not exclude a case of a plurality of objects. A single processor or another unit can implement several functions enumerated in the claims. Some measures are recorded in dependent claims that are different from each other, but this does not mean that these measures cannot be combined to produce good effect.

The foregoing has described embodiments of this application. The foregoing descriptions are examples, not exhaustive, and are not limited to the disclosed embodiments. Many modifications and changes are apparent to those of ordinary skill in the art without departing from the scope and spirit of the illustrated embodiments. The selection of terms used in this specification is intended to best explain the principles of embodiments, actual application, or improvements to technologies in the market, or to enable another person of ordinary skill in the art to understand embodiments disclosed in this specification.

## Claims

1. A voltage transient response control circuit, comprising: a switched capacitor, a voltage regulator module, and a voltage switching module, wherein two ends of the switched capacitor are respectively connected to a load and the voltage switching module, and the voltage regulator module and the voltage switching module are separately connected to the load;

    the voltage regulator module is configured to provide a low power supply voltage for the load based on a power supply requirement of the load; and
    the voltage switching module is configured to: perform voltage detection on the load to obtain a load voltage, generate a switching signal based on a change trend of the load voltage and value relationships between the load voltage and a first threshold and between the load voltage and a second threshold, and control, based on the switching signal, the switched capacitor to absorb an excess charge when the load voltage overshoots and release a stored charge when the load voltage droops.

2. The circuit according to claim 1, wherein the switched capacitor comprises a first switched capacitor and a second switched capacitor, the voltage switching module comprises a first droop unit, a first overshoot unit, an auxiliary power supply, and a controller, the first droop unit comprises a first switch and a second switch, and the first overshoot unit comprises a third switch and a fourth switch;

one end of the first switched capacitor is connected to the load, the other end is connected to a common end of the first switch and the second switch, the other end of the first switch is connected to a positive terminal of the auxiliary power supply, the other end of the second switch is connected to a ground, one end of the second switched capacitor is connected to the load, the other end is connected to a common end of the third switch and the fourth switch, the other end of the third switch is connected to the positive terminal of the auxiliary power supply, the other end of the fourth switch is connected to the ground, a negative terminal of the auxiliary power supply is grounded, and the controller is connected to the first switch, the second switch, the third switch, the fourth switch, and the load; and

the controller is configured to perform voltage detection on the load to obtain the load voltage, the controller is further configured to: when it is determined that the load voltage is less than the first threshold and greater than the second threshold, and a voltage value of the load voltage is stable, send a generated first control signal to the first switch and the second switch and send a generated second control signal to the third switch and the fourth switch, wherein the first switch and the second switch are respectively turned off and on in response to the first control signal, so that the first switched capacitor enters an initial state; and the third switch and the fourth switch are respectively turned on and off in response to the second control signal, so that the second switched capacitor enters the initial state, and the controller is further configured to: generate the switching signal based on the change trend of the load voltage and the value relationships between the load voltage and the first threshold and between the load voltage and the second threshold and send the switching signal to the switches in the first droop unit or the first overshoot unit, so that the first switched capacitor or the second switched capacitor releases the stored charge when the load voltage droops, and the first switched capacitor or the second switched capacitor absorbs the excess charge when the load voltage overshoots.

3. The circuit according to claim 2, wherein there are a plurality of first droop units in the voltage switching module and a plurality of first switched capacitors are comprised, and/or there are a plurality of first overshoot units in the voltage switching module and a plurality of second switched capacitors are comprised; two ends of each first switched capacitor are respectively connected to the load and a common end of a first switch and a second switch in a corresponding first droop unit, and two ends of each second switched capacitor are respectively connected to a common end of a third switch and a fourth switch in a corresponding first overshoot unit; and

the controller is further configured to determine a current control mode, to respectively send the first control signal and the second control signal to a target droop unit and a target overshoot unit that correspond to the current control mode and send the switching signal to the target droop unit or the target overshoot unit, wherein the current control mode is one of a plurality of alternative control modes, first thresholds and/or second thresholds of different alternative control modes are different, alternative control modes corresponding to different first droop units are different, alternative control modes corresponding to different first overshoot units are different, the target droop unit is a first droop unit, in the plurality of first droop units, whose alternative mode is the current control mode, and the target overshoot unit is a first overshoot unit, in the plurality of first overshoot units, whose alternative mode is the current control mode.

4. The circuit according to claim 1, wherein the switched capacitor comprises a third switched capacitor and a fourth switched capacitor, the voltage switching module comprises a second droop unit, a second overshoot unit, and a controller, the second droop unit comprises a first inductor and a fifth switch, and the second overshoot unit comprises a second inductor and a sixth switch;

the third switched capacitor, the first inductor, and the fifth switch are connected in series and then connected between the load and a ground, the fourth switched capacitor, the second inductor, and the sixth switch are connected in series and then connected between the load and the ground, and the controller is connected to the load, the fifth switch, and the sixth switch; and the controller is configured to perform voltage detection on the load to obtain the load voltage, the controller is further configured to: when it is determined that the load voltage is less than the first threshold and greater than the second threshold, and a voltage value of the load voltage is stable, send a generated third control signal to the fifth switch, wherein the fifth switch is turned on for preset duration and then turned off in response to the third control signal, so that the third switched capacitor enters an initial state; and the sixth switch is in an off state, so that the fourth switched capacitor enters the initial state, and the controller is further configured to: generate the switching signal based on the change trend of the load voltage and the value relationships between the load voltage and the first threshold and between the load voltage and the second threshold and send the switching signal to the switch in the second droop unit or the second overshoot unit, so that the third switched capacitor or the fourth switched capacitor releases the stored charge when the load voltage droops, and the third switched capacitor or the fourth switched capacitor absorbs the excess charge when the load voltage overshoots.

5. The circuit according to claim 4, wherein there are a plurality of second droop units in the voltage switching module and a plurality of third switched capacitors are comprised, and/or there are a plurality of second overshoot units in the voltage switching module and a plurality of fourth switched capacitors are comprised; two ends of each third switched capacitor are respectively connected to the load and a first inductor in a corresponding second droop unit, and two ends of each fourth switched capacitor are respectively connected to the load and a second inductor in a corresponding second overshoot unit; and

the controller is further configured to determine a current control mode, to send the third control signal to a target droop unit corresponding to the current control mode and send the switching signal to the target droop unit or a target overshoot unit corresponding to the current control mode, wherein
the current control mode is one of a plurality of alternative control modes, first thresholds and/or second thresholds of different alternative control modes are different, alternative control modes corresponding to different second droop units are different, alternative control modes corresponding to different second overshoot units are different, the target droop unit is a second droop unit, in the plurality of second droop units, whose alternative mode is the current control mode, and the target overshoot unit is a second overshoot unit, in the plurality of second overshoot units, whose alternative mode is the current control mode.

6. The circuit according to claim 1, wherein the switched capacitor comprises a fifth switched capacitor and a sixth switched capacitor, the voltage switching module comprises a third droop unit, a third overshoot unit, and a controller, the third droop unit comprises a third inductor, a seventh switch, and an eighth switch, and the third overshoot unit comprises a fourth inductor, a ninth switch, and a tenth switch;

the fifth switched capacitor, the third inductor, and the seventh switch are connected in series and then connected between the load and a ground, the eighth switch is connected in parallel to the fifth switched capacitor, the sixth switched capacitor, the fourth inductor, and the ninth switch are connected in series and then connected between the load and the ground, the tenth switch is connected in parallel to the sixth switched capacitor, and the controller is connected to the load, the seventh switch, the eighth switch, the ninth switch, and the tenth switch; and
the controller is configured to perform voltage detection on the load to obtain the load voltage, the controller is further configured to: when it is determined that the load voltage is less than the first threshold and greater than the second threshold, and a voltage value of the load voltage is stable, send a generated fourth control signal to the seventh switch, wherein the seventh switch is turned on for preset duration and then turned off in response to the fourth control signal, so that the fifth switched capacitor enters an initial state; and the eighth switch is in an off state, so that the sixth switched capacitor enters the initial state, and the controller is further configured to generate the switching signal based on the change trend of the load voltage and the value relationships between the load voltage and the first threshold and between the load voltage and the second threshold and send the switching signal to the switches in the third droop unit or the third overshoot unit, so that the fifth switched capacitor or the sixth switched capacitor releases the stored charge when the load voltage droops, and the fifth switched capacitor or the sixth switched capacitor absorbs the excess charge when the load voltage overshoots.

7. The circuit according to claim 6, wherein there are a plurality of third droop units in the voltage switching module and a plurality of fifth switched capacitors are comprised, and/or there are a plurality of third overshoot units in the voltage switching module and a plurality of sixth switched capacitors are comprised; two ends of each fifth switched capacitor are respectively connected to the load and a corresponding third droop unit, and two ends of each sixth switched capacitor are respectively connected to the load and a corresponding third overshoot unit; and

the controller is further configured to determine a current control mode, to send the fourth control signal to a target droop unit corresponding to the current control mode and send the switching signal to the target droop unit or a target overshoot unit corresponding to the current control mode, wherein the current control mode is one of a plurality of alternative control modes, first thresholds and/or second thresholds of different alternative control modes are different, alternative control modes corresponding to different third droop units are different, alternative control modes corresponding to different third overshoot units are different, the target droop unit is a third droop unit, in the plurality of third droop units, whose alternative mode is the current control mode, and the target overshoot unit is a third overshoot unit, in the plurality of third overshoot units, whose alternative mode is the current control mode.

$V_{cc,H}$          $V_{cc}$

Power supply control

$I_{injected}$

CI enabled

$V_{cc}$ droop detection

Load

FIG. 1A

μP
Switch activity

$I_L$

$V_{cc}$ is reduced due to Ldi/dt

$V_{cc}$

Time

FIG. 1B

μP
Switch activity

$I_L$

$V_{cc}$ is reduced due to Ldi/dt

$V_{cc}$

DD threshold

CI enabled

$Q_{injected}$ (Injected charge)

$I_{injected}$

Time

FIG. 1C

FIG. 2

FIG. 3A

FIG. 3B

FIG. 4

FIG. 5A

Heavy load

Light load    Light load

Load
current

Unregulated load voltage

$V_{overshoot}$

Regulated load
voltage

$V_{droop}$

On

101    Off    Off

102    On    On

Off

41 Current

Time

t1    t2

FIG. 5B

FIG. 6

FIG. 7A

FIG. 7B

FIG. 7C

FIG. 7D

Current

FIG. 7E

Voltage

FIG. 7F

FIG. 7G

FIG. 8A

FIG. 8B

FIG. 8C

FIG. 8D

FIG. 8E

FIG. 8F

FIG. 8G

FIG. 9

EP 4 672 585 A1

## INTERNATIONAL SEARCH REPORT

| | International application No. |
|---|---|
| | **PCT/CN2024/072486** |

**A. CLASSIFICATION OF SUBJECT MATTER**

H02M 3/158(2006.01)i

According to International Patent Classification (IPC) or to both national classification and IPC

**B. FIELDS SEARCHED**

Minimum documentation searched (classification system followed by classification symbols)

IPC: H02M

Documentation searched other than minimum documentation to the extent that such documents are included in the fields searched

Electronic data base consulted during the international search (name of data base and, where practicable, search terms used)

CNTXT: CNABS; DWPI; WPABS; WPABSC; ENTXTC; USTXT; CNKI; IEEE: 开关电容, 瞬态, 过冲, 跌落, 存储, 电荷, 切换, 选择, 负载, 调节, switch+ capacit+, transient, overshoot, fall, storage, charge, switch+, select+, load, regulation

**C. DOCUMENTS CONSIDERED TO BE RELEVANT**

| Category* | Citation of document, with indication, where appropriate, of the relevant passages | Relevant to claim No. |
|---|---|---|
| A | CN 106612069 A (REALTEK SEMICONDUCTOR CORP.) 03 May 2017 (2017-05-03) description, paragraphs 0071-0083, and figures 1-3 | 1-7 |
| A | CN 106253631 A (INFINEON TECHNOLOGIES AG) 21 December 2016 (2016-12-21) entire document | 1-7 |
| A | CN 108718537 A (B.G. NEGEV TECHNOLOGIES AND APPLICATIONS LTD., AT BEN-GURION UNIVERSITY) 30 October 2018 (2018-10-30) entire document | 1-7 |
| A | US 2017302172 A1 (B.G. NEGEV TECHNOLOGIES AND APPLICATIONS LTD., AT BEN-GURION UNIVERSITY) 19 October 2017 (2017-10-19) entire document | 1-7 |
| A | US 2022302838 A1 (TELEFONAKTIEBOLAGET LM ERICSSON (PUBL)) 22 September 2022 (2022-09-22) entire document | 1-7 |

☐ Further documents are listed in the continuation of Box C.    ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **18 March 2024** | **28 March 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/072486**

| Patent document cited in search report | | | Publication date (day/month/year) | Patent family member(s) | | | Publication date (day/month/year) |
|---|---|---|---|---|---|---|---|
| CN | 106612069 | A | 03 May 2017 | None | | | |
| CN | 106253631 | A | 21 December 2016 | None | | | |
| CN | 108718537 | A | 30 October 2018 | None | | | |
| US | 2017302172 | A1 | 19 October 2017 | US | 10326359 | B2 | 18 June 2019 |
| US | 2022302838 | A1 | 22 September 2022 | None | | | |

Form PCT/ISA/210 (patent family annex) (July 2022)

**REFERENCES CITED IN THE DESCRIPTION**

**Patent documents cited in the description**

- CN 202310280556X